Europäisches Patentamt

European Patent Office

Office européen des brevets

(18)

(11) Publication number: **0 019 445**
**B2**

# NEW EUROPEAN PATENT SPECIFICATION

(12)

(45) Date of publication of the new patent specification: **05.10.88**

(21) Application number: **80301549.4**

(22) Date of filing: **12.05.80**

(51) Int. Cl.⁴: **C 07 F 9/38**

(54) Process for the preparation of N-phosphonomethyl glycine.

(30) Priority: **11.05.79 HU ma003146**

(43) Date of publication of application:
**26.11.80 Bulletin 80/24**

(45) Publication of the grant of the patent:
**18.05.83 Bulletin 83/20**

(45) Mention of the opposition decision:
**05.10.88 Bulletin 88/40**

(84) Designated Contracting States:
**AT BE CH DE FR GB IT LI LU NL SE**

(56) References cited:
**DE-A-2 366 060**
**DE-B-2 327 680**
**DE-C-2 519 388**

(73) Proprietor: **NITROKEMIA IPARTELEPEK**
**Pf. 45**
**H-8184 Füzfögyártelep (HU)**

(72) Inventor: **Gaal, Antal**
**4 Gagarin u.**
**Fuzfogyartelep (HU)**
Inventor: **Farkas, Jozsef**
**12 Gagarin u.**
**Fuzfogyartelep (HU)**
Inventor: **Horvath, Sandor**
**83 Ond u.**
**Liter (HU)**
Inventor: **Balint, Sandor**
**7 Stromfeld u.**
**Veszprem (HU)**
Inventor: **Kolonics, Zoltan**
**61 Bajcsy Zs. u.**
**Balatonalmadi (HU)**
Inventor: **Soltesz, Laszlo**
**23 B. forras**
**Fuzfogyartelep (HU)**
Inventor: **Lorincz, Lajos**
**10 Korach M. u.**
**Veszprem (HU)**
Inventor: **Hajdu, Peter**
**17 Asboth u.**
**Budapest (HU)**
Inventor: **Botar, Laszlo**
**90/b., Hegyalja u.**
**Budapest (HU)**

**0 019 445**

(72) Inventor: **Nemes, Istvan**
**20 Tomos u.**
**Budapest (HU)**
Inventor: **Gedra, Agnes**
**10 Tompa u.**
**Szomod (HU)**
Inventor: **Sumegi, Laszlo**
**31 Rakosliget u.**
**Budapest (HU)**
Inventor: **Vidroczy, Tamas**
**31 Bartok b. u.**
**Budapest (HU)**
Inventor: **Lukacs, Julia**
**99/a Pasareti ut**
**Budapest (HU)**
Inventor: **Gal, Dezso**
**19-21 Berc utca**
**Budapest (HU)**
Inventor: **Keszler, Agnes**
**1 Bajza u.**
**Budapest (HU)**

(74) Representative: **Cockbain, Julian Roderick**
**Michaelson et al**
**Frank B. Dehn & Co. European Patent Attorneys**
**Imperial House 15-19, Kingsway**
**London WC2B 6UZ (GB)**

## Description

The present invention relates to an improvement in the process for the preparation of N-phosphonomethyl glycine by the oxidation of N-phosphonomethyl imino diacetic acid with oxygen or an oxygen-containing gas in the presence of a catalyst.

N-phosphonomethyl glycine has been known and widely used for almost a decade for its herbicidal activity. N-phosphonomethyl glycine (Glyphosate) is suitable for the control of various monocotyledonous and dicotyladonous annual and perennial undesired plants in case of post-emergent treatment. A particular advantage of the compound is that it does not possess any persistent activity and thus it can be successfully employed in crop rotations (Proc. N. Cent. Weed Control Conf. 26, 64/1971/).

N-phosphonomethyl-glycine is most often prepared by the oxidation of N-phosphonomethyl iminodiacetic acid. One known process comprises oxidizing the starting material with hydrogen peroxide (Dutch Terinzagelegging No. 73 07 449). According to another method the acetic acid group of the starting material is split off by acid catalysed hydrolysis (Hungarian Patent Specification No. 165 965).

Electrolytic oxidation is disclosed in German Federal Republic Patent Specification No. 2 363 634, U.S. Patent Specification No. 3 859 183, and British Patent Specification No. 1 452 644. In the first of these reference N-phosphonomethyl imino diacetic acid is subjected to anodic oxidation in acidic medium by using graphite electrodes, whereas the last two references relate to oxidation carried out on the tetraester group of N-phosphonomethyl imino diacetic acid and the desired end product is formed by hydrolysing the obtained N-phosphonomethyl glycine triester.

Oxidation of N-phosphonomethyl imino diacetic acid may also be carried out with oxygen or oxygen-containing gas in the presence of a catalyst (US Patent Specification No. 3 969 398, German Federal Republic Patent Specification No. 2 519 388, German Federal Republic Offenlegungsschrift 2366060 and Belgian Patent Specification No. 861 996). The advantage of the catalytical oxidation over the known methods mentioned above is that it does not require expensive chemicals or electrolysing equipment. Severe drawbacks of this method, however come from the fact that N-phosphomethyl imino diacetic acid, used as starting material, is poorly soluble in water (saturation concentration of the compound at 25°C: 1% by weight, at 95°C: 4% by weight, and even at 150°C i.e. even in cases when operations are conducted at a higher pressure than normal pressure, the solubility amounts only to 10% by weight (see German Federal Republic Patent Specification No. 2 519 388)). German Federal Republic Offenlegungsschrift 2366060 suggests that the process be carried out using saturated aqueous solutions of N-phosphonomethyl imino diacetic acid but does indicate that the catalytic oxidation could be effected at higher or lower acid concentrations; however, the acid concentrations exemplified are all less than 6g/100 ml water.

As a consequence of the minimal solubility of N-phosphonomethyl imino diacetic acid, aqueous solutions have to be employed in a large amount thereby reducing the useful capacity of the reactor and thus increasing the energy required. A large amount of water has to be removed from the effluent requiring a further amount of energy. This process is thus uneconomical considering both utilization of capacity and energy balance.

In order to eliminate the disadvantages mentioned above a method is disclosed in Belgian Patent Specification No. 861 996, according to which the salts of N-phosphonomethyl-imino discetic acid are used as starting material. Depending upon the character of the cation present, the salts of N-phosphonomethyl imino diacetic acid form a 5—30% saturated solution with water at a temperature of 100°C. From the point of view energy-saving, only those salts whose solubility is close to the upper limit of the saturated concentration may be used in large scale practice. Thus, for example, the isopropyl amine salt of N-phosphonomethyl imino diacetic acid may be employed. Data disclosed in Belgian Patent Specification No. 861 996 show that during the oxidation of the compound a considerable amount of by-products is formed (such as N-methyl-N-phosphonomethyl glycine and methylamine methyl phosphonic acid), which reduce the yield of the end-product and which may be removed from the end-product only with difficulty. Though the formation of by-products may be reduced if the conventionally-used charcoal catalysts are replaced by a platinum catalyst (in which case the rate of the main reaction is selectively increased) side reactions however can never be eliminated completely. A further disadvantage is the low yield of the reaction: isopropylamine salt of N-phosphonomethyl glycine is obtained even in the most favourable case in the form of about 20% aqueous solution, thus a large amount of water still has to be removed from the solution (about 50%) if the product is formulated in the commercially available form of a 36% aqueous solution. This process is however somewhat more economical than the previous process, but neither the purity of the product nor the energy balance of the process is satisfying.

According to the present invention the disadvantages of the above-mentioned currently known processes are largely eliminated by preparing pure N-phosphonomethyl glycine by an economic, energy-saving and capacity-increasing process.

We have now found that catalytic oxidation of N-phosphonomethyl imino diacetic acid may be carried out in suspension thus completely or almost completely converting N-phosphonomethyl imino diacetic acid to N-phosphonomethyl glycine with a great specific conversion (related to time units and identical liquid volumes).

The process according to the invention was not obvious in the light of the disclosure of German Federal Republic Patent Specification No. 25193 88. On the contrary in the cited reference a process is disclosed comprising the oxidation of N-phosphonomethyl imino diacetic acid carried out in aqueous solutions and not even the use of supersaturated solutions is suggested because: "the precipitation of the starting material can be expected whereby the reaction is slowing down and the separation and purification of the product becomes more difficult".

Similar conclusions could be drawn when considering the reaction mechanism of suspensions. As the reaction may take place only on the boundary surfaces, it could be expected that the reaction — if it takes place at all — would be extremely slow from the beginning, the rate of reaction would gradually decrease with accumulating end-product and, on achieving a given concentration the reaction would substantially come to an end as the molecules of the end-product formed on the boundary surface can diffuse only very slowly into the inner part of the liquid layer. Thus even in the most favourable cases only very slow reactions could be expected in suspensions, where 100% conversion is not achieved. We have now surprisingly found that the amount of the starting material converted within one time unit (expressed in grams) in a suspension is about twice that amount obtained in the reaction conducted in liquid layer and furthermore the starting material can be completely converted to the end-product. It has to be noted that none of the conventionally-used methods to accelerate the reaction in suspensions (such as pre-grinding in a colloid mill, treatment with wetting agents etc.) need be used.

According to the present invention we therefore provide a process for the preparation of N-phosphonomethyl-glycine by the oxidation of N-phosphonomethyl-imino diacetic acid in the presence of a catalyst with oxygen or an oxygen-containing gas, characterised in that said process comprises forming an aqueous suspension of at least 7 g of N-phosphonomethyl-imino diacetic acid per 100 ml of water and subsequently carrying out said oxidation on said suspension.

According to a further aspect of the present invention we also provide N-phosphonomethyl-glycine whenever produced by the process of the present invention.

The content of N-phosphonomethyl-imino diacetic acid of the aqueous suspension may vary within a relatively wide range. The upper limit depends on the miscibility of the reaction mixture. Nevertheless the use of suspensions containing 30—50% of solids is preferable.

Oxidation is carried out with oxygen or a gas mixture containing oxygen, such as air. If pure oxygen is employed as the oxidant, the rate of reaction is higher than the rate of oxidation conducted with air, but considering the equipment, energy and labour requirements for the preparation of pure oxygen it is more economical to use air as the oxidant.

The reaction temperature may vary within relatively wide limits. The reaction conveniently is carried out at a temperature ranging from ambient temperature to 200°C, preferably from 50 to 150°C, more preferably from 70 to 120°C.

The reaction may be conducted at normal pressure but the reaction rate is rather low when working under normal pressure. The reaction is preferably carried out at elevated pressure, such as for example, 203 to 2027 kN/m$^2$ (2—20 atm). It is particularly preferred if the reaction is conducted at 405 to 1013 kN/m$^2$ (4—10 atm). Significant further improvement is not achieved at pressures in excess of the upper limit given above.

Oxidation is always conducted under shaking or stirring. The rate of shaking or stirring should be sufficient to give a homogeneous suspension, local in-homogeneities may slow down the reaction and thus the end products may contain impurities.

Those catalysts suitable for use in the process of the present invention include, for example, the known catalysts, such as powder formed or granular charcoal (e.g. German Federal Republic Patent Specification No. 2 519 388), noble metal oxide catalysts on a carrier (e.g. platinum or palladium applied on activated charcoal), noble metal oxide catalysts (such as platinum oxide). Noble metal, preferably platinum or palladium, catalysts applied on activated charcoal ensure a higher initial rate of reaction than the activated charcoal catalysts, that is to say they act as rate increasing catalysts as disclosed in Belgian Patent Specification No. 861 996. Activated charcoal may be separated by simple filtration and it may be fully recovered by washing with hot water and by drying at 100—120°C. The separate catalyst may be suspended in hot water during which oxygen or an oxygen-containing gas, e.g. air, is introduced and the recovered catalyst subsequently is dried. The catalytic activity of the recovered catalyst does not significantly decrease even after 10 working cycles. On the other hand, according to Belgian Patent Specification No. 861 996, activated charcoal when used as a catalyst for the oxidation carried out in a solution looses its actitivity after a few cycles and can no longer be removed.

According to the invention, however no significant losses in the material were observed in the course of the recovery of the catalyst.

At least 5 mg. of catalyst are used per 1 g. of the starting material N-phosphonomethyl imino diacetic acid. The upper limit of the amount of the catalyst is for the most part determined by economic factors. The amount of the catalyst may be for example 0.5—100%, preferably 5—60%, particular preferably 5—40% of the amount of N-phosphonomethyl imino diacetic acid.

N-phosphonomethyl glycine obtained according to the process of the invention is shown by NMR spectroscopy to be in the form of a highly pure product. The obtained aqueous solution may be concentrated, if desired, according to the requirements of the user, or N-phosphonomethyl glycine may alternatively be separated in solid form. Solutions obtained according to the invention and containing N-phosphonomethyl glycine may, after distilling off formaldehyde, be employed directly for agrochemical purposes.

Percentages herein refer to percentages by weight unless otherwise indicated.

The following Examples serve to illustrate the present invention without limiting the scope of protection sought therefor.

### Comparative Example A

The reaction is carried out in an acid-fast 200 ml. cylindrical steel tank equipped with a heating jacket, thermometer, and an air-introducing and air-outlet valve. To the reactor a solution of 4 g. of N-phosphonomethyl imino diacetic acid in 100 ml. of water at a temperature of 100°C is added and to the solution 0.4 g. of NORIT A (registered Trade Mark) catalyst is introduced. The reactor is sealed, fixed on a shaker and air is introduced into the reactor until a pressure of 608 kN/m² (6 atm) is achieved. The reaction is carried out at 90—95°C under steady shaking of the contents of the reactor. The formaldehyde and carbon dioxide formed during the reaction are blown out from the reactor every 30 minutes. Under such conditions the reaction is complete within 2.5 hours and 2.8 g (100%) of pure N-phosphonomethyl glycine are obtained (purity verified by NMR spectroscopy). Specific conversion is calculated according to the following formula:

$$\text{specific conversion} = \frac{\text{weight of end product (g.)}}{\text{volume of liquid (litre)} \times \text{reaction time (hour)}}$$

Specific conversion: 112 g/l. hour

### Example 1

One may proceed according to Example A but as starting material 100 g. of water, 20 g. of N-phosphonomethyl imino diacetic acid and as catalyst 2 g. of NORIT A are used. After a reaction time of 6.5 hours, 14 g. of N-phosphonomethyl glycine are obtained and thus the specific conversion amounts to 21.5 g/litres.hour (1.9 times greater than that achieved according to Example A).

### Example 2

One may proceed as disclosed in Example A but as starting material 100 g. of water, 40 g. of N-phosphonomethyl imino diacetic acid and as catalyst 4 g. of NORIT A catalyst are used. After a reaction time of 10 hours, 28.6 g. of pure N-phosphonomethyl glycine are obtained (verified by NMR spectroscopy). Specific conversion: 28.6 g./litres.hour (2.5 times greater than that obtained in Example A).

### Example 3

One may proceed as disclosed in Example A but as starting material 100 g. of water, 30 g. of N-phosphonomethyl imino diacetic acid and as catalyst 3 g. of NORIT A catalyst are employed. After a reaction time of 8.5 hours, 21.2 g. of pure N-phosphonomethyl glycine are obtained (verified by NMR spectroscopy). Specific conversion: 24.9 g./litres.hour (2.2 times greater than that achieved according to Example A).

### Example 4

One may proceed as described in Example A but using as starting material 100 ml. of water, 20 g. of N-phosphonomethyl imino diacetic acid and as catalyst 2 g. of NORIT A catalyst (the catalyst having been recovered after the reaction disclosed in Example 5). After a reaction time of 6.5 hours, 14.2 g, of pure N-phosphonomethylglycine are obtained, the purity of which is verified by NMR spectroscopy. Achieved specific conversion: 21.8 g./litres.hour (1.9 times greater than that achieved according to Example A).

After recovery, the catalyst is used in five further working cycles. The activity of the catalyst is not reduced.

### Example 5

One may proceed as disclosed in Example A but as starting material 100 ml. of water, 20 g. of N-phosphonomethyl imino diacetic acid and as catalyst 5% palladium/charcoal (CARBO C Extra—registered Trade Mark) are employed. After a reaction time of 5 hours 14.4 g. of pure 4-phosphonomethyl glycine are obtained, the purity of which is verified by NMR spectroscopy. Achieved specific conversion: 28.8 g./litres.hour (2.5 times greater than that obtained in Example A).

### Example 6

One may proceed as disclosed in Example A but as starting material 100 ml. of water, 20 g. of N-phosphonomethyl imino diacetic acid and as catalyst 2 g. of CARBO C Extra are employed. After 7 hours reaction time, 14.3 g. of pure N-phosphonomethyl glycine are obtained the purity of which was checked by NMR spectroscopy. Achieved specific conversion: 20.8 g./litres.hours (1.85 times greater than the value achieved in Example A).

### Example 7

One may proceed as disclosed in Example A but as starting material 100 ml. of water, 20 g. of N-phosphonomethyl imino diacetic acid and as catalyst 2 g. of 5% platinum/charcoal (CARBO C Extra) are used. After a reaction time of 4.5 hours, 14.2 g. of pure N-phosphonomethyl glycine are obtained the purity of which is checked by NMR spectroscopy. The achieved specific conversion: 31.5 g/litres.hours (2.8 times greater than the value obtained in Example A).

When comparing data of Examples 7 to 9, it can be observed that by using noble metals the reaction rate may be increased.

**Claims**

1. A process for the preparation of N-phosphonomethylglycine by the oxidation of N-phosphonomethyl-imino diacetic acid in the presence of a catalyst with oxygen or an oxygen-containing gas, characterised in that said process comprises forming an aqueous suspension of at least 7 g of N-phosphonomethyl-imino diacetic acid per 100 ml of water and subsequently carrying out said oxidation on said suspension.

2. A process as claimed in claim 1 wherin the aqueous suspension used as starting material contains from 7 to 70 g of N-phosphonomethyl-imino diacetic acid per 100 ml of water.

3. A process as claimed in claim 1 wherein the aqueous suspension used as starting material contains from 20 to 50 g of N-phosphonomethyl-imino diacetic acid per 100 ml of water.

4. A process as claimed in any one of claims 1 to 3 wherein the oxygen-containing gas used to effect the oxidation is air.

5. A process as claimed in any one of claims 1 to 4 wherein the said oxidation is effected at an elevated pressure.

6. A process as claimed in any one of claims 1 to 5 wherein the said catalyst comprises activated charcoal.

7. A process as claimed in claim 6 further comprising the separation by filtration of the activated charcoal catalyst after the oxidation, and the recovery of the separated catalyst by washing with hot water and drying at 100 to 120°C.

8. A process as claimed in claim 7 wherein the washing of the catalyst is effected with hot water during the introduction of oxygen, air or another oxygen-containing gas.

**Patentansprüche**

1. Verfahren zur Herstellung von N-Phosphonomethyl-glycin durch Oxidation von N-Phosphonomethyl-iminodiessigsäure in Gegenwart eines Katalysators mit Sauerstoff oder einem sauerstoffhaltigen Gas, dadurch gekennzeichnet, daß man bei dem Verfahren eine wäßrige Suspension von wenigstens 7 g N-Phosphonomethyl-iminodiessigsäure pro 100 ml Wasser herstellt und anschließend die Oxidation der genannten Suspension durchführt.

2. Verfahren gemäß Anspruch 1, dadurch gekennzeichnet, daß die als Ausgangsmaterial verwendete wässrige Suspension 7 bis 70 g N-Phosphonomethyliminodiessigsäure pro 100 ml Wasser enthält.

3. Verfahren gemäß Anspruch 1, dadurch gekennzeichnet, daß die als Ausgangsmaterial verwendete wässrige Suspension 20 bis 50 g N-Phosphonomethyliminodiessigsäure pro 100 ml Wasser enthält.

4. Verfahren gemäß einem der Ansprüche 1 bis 3, dadurch gekennzeichnet, daß das die Oxidation bewirkende sauerstoffhaltige Gas Luft ist.

5. Verfahren gemäß einem der Ansprüche 1 bis 4, dadurch gekennzeichnet, daß die Oxidation bei erhöhtem Druck bewirkt wird.

6. Verfahren gemäß einem der Ansprüche 1 bis 5, dadurch gekennzeichnet, daß der Katalysator Aktivkohle enthält.

7. Verfahren gemäß Anspruch 6, dadurch gekennzeichnet, daß man den aktivierten Aktivkohlekatalysator nach der Oxidation durch Filtrieren abtrennt und den abgetrennten Katalysator durch Waschen mit heißem Wasser und Trocknen bei 100 bis 120°C wiedergewinnt.

8. Verfahren gemäß Anspruch 7, dadurch gekennzeichnet, daß das Waschen des Katalysators mit heißem Wasser während der Einführung von Sauerstofft, Luft oder einem anderen sauerstoffhaltigem Gas erfolgt.

**Revendications**

1. Procédé de préparation de N-phosphonométhyl-glycine par l'oxydation d'acide N-phosphonométhyl-imino-diacétique en présence d'un catalyseur avec de l'oxygène ou un gaz contenant de l'oxygène, caractérisé en ce que ledit procédé comprend la formation d'une suspension aqueuse d'au moins 7 g d'acide N-phosphonométhyl-imino-diacétique pour 100 ml d'eau et la mise en oeuvre subséquente de ladite oxydation sur ladite suspension.

2. Procédé selon la revendication 1 où la suspension aqueuse utilisée comme produit de départ contient de 7 à 70 g d'acide N-phosphonométhyl-imino-diacétique pour 100 ml d'eau.

3. Procédé selon la revendication 1 où la suspension aqueuse utilisée comme produit de départ contient de 20 à 50 g d'acide N-phosphonométhyl-imino-diacétique pour 100 ml d'eau.

4. Procédé selon l'une quelconque des revendications 1 à 3 où la gaz .contenant de l'oxygène utilisé pour réaliser l'oxydation est l'air.

5. Procédé selon l'une quelconque des revendications 1 à 4 où ladite oxydation est conduite à une pression élevée.

6. Procédé selon l'une quelconque des revendications 1 à 5 où ledit catalyseur comprend du carbon de bois activé.

7. Procédé selon la revendication 6 comprenant en outre la séparation par filtration du catalyseur au charbon de bois activé après l'oxydation, et la récupération du catalyseur séparé par lavage avec de l'eau chaude et séchage entre 100 et 120°C.

8. Procédé selon la revendication 7 où le lavage du catalyseur est conduit avec de l'eau chaude pendant l'introduction d'oxygène, d'air ou d'un autre gaz contenant de l'oxygène.